(19) Europäisches Patentamt / European Patent Office / Office européen des brevets

(11) **EP 3 572 774 B1**

(12) **FASCICULE DE BREVET EUROPEEN**

(45) Date de publication et mention
de la délivrance du brevet:
**28.12.2022  Bulletin 2022/52**

(21) Numéro de dépôt: **19174905.0**

(22) Date de dépôt: **16.05.2019**

(51) Classification Internationale des Brevets (IPC):
**G01S 17/933** (2020.01)   **G01S 13/60** (2006.01)
**G01S 13/88** (2006.01)   **G01S 17/58** (2006.01)
**G08G 5/00** (2006.01)   **G01C 23/00** (2006.01)
**B64D 45/04** (2006.01)

(52) Classification Coopérative des Brevets (CPC):
**G08G 5/0056; G01C 23/00; G01S 13/882;
G01S 17/58; G01S 17/933;** B64D 45/04;
G01S 13/60; G01S 13/935

(54) **PROCEDE ET DISPOSITIF DE DETERMINATION ET D AFFICHAGE D'UNE DISTANCE DE SECURITE D'UN GIRAVION EN PRENANT EN COMPTE LA HAUTEUR DES VAGUES**

VERFAHREN UND VORRICHTUNG ZUR BESTIMMUNG UND ANZEIGE EINES SICHERHEITSABSTANDS EINES DREHFLÜGELFLUGZEUGS UNTER BERÜCKSICHTIGUNG DER WELLENHÖHE

METHOD AND DEVICE FOR DETERMINING AND DISPLAYING A SAFETY DISTANCE OF A ROTORCRAFT TAKING INTO ACCOUNT THE HEIGHT OF THE WAVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2018  FR 1800508**

(43) Date de publication de la demande:
**27.11.2019  Bulletin 2019/48**

(73) Titulaire: **Airbus Helicopters
13725 Marignane Cedex (FR)**

(72) Inventeur: **SALESSE-LAVERGNE, Marc
13190 ALLAUCH (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
JP-A- H0 743 109   RU-C1- 2 024 034
RU-C1- 2 557 999   RU-C1- 2 563 314
US-A1- 2008 215 197   US-A1- 2009 140 885
US-A1- 2013 221 153   US-B1- 6 195 598
US-B1- 9 387 938

• **MARK W SCOTT: "Aircraft Design Considerations to Meet One Engine Inoperative (OEI) Safety Requirements", NASA CENTER FOR AEROSPACE INFORMATION (CASI). CONFERENCE PROCEEDINGS, 1 août 2012 (2012-08-01), XP055551105, Hampton**
• **Tom Wood: "One Engine Inoperative (OEI) and Autorotation For Heavy Lift Rotorcraft Systems", NASA Center for AeroSpace Information (CASI). Reports, 1 août 2012 (2012-08-01), XP055551108, Hampton Extrait de l'Internet: URL:https://rotorcraft.arc.nasa.gov/Publications/files/Wood_CR_2012_216038.pdf [extrait le 2019-02-04]**

## Description

La présente invention se rapporte au domaine technique général des aides au pilotage d'aéronefs et en particulier des aides au pilotage d'un giravion muni de plusieurs moteurs dans le cas d'une panne de l'un de ces moteurs.

La présente invention concerne un procédé de détermination et d'affichage d'une distance de sécurité d'un giravion par rapport à la surface libre d'eau en prenant en compte la hauteur des vagues ainsi qu'un dispositif mettant en œuvre ce procédé.

Un giravion, aussi appelé « aéronef à voilure tournante », est un appareil volant qui se distingue principalement des autres aéronefs motorisés par sa capacité à évoluer aussi bien en vol de croisière à vitesses élevées qu'en vol à basses vitesses ou en vol stationnaire. Une telle capacité est procurée par l'exploitation d'au moins une voilure tournante, tel un rotor principal, à axe de rotation sensiblement vertical.

Un giravion peut comporter un seul moteur ou bien plusieurs moteurs, typiquement deux moteurs, afin d'entraîner en rotation le rotor principal. Le cadre de l'invention se limite aux giravions comportant au moins deux moteurs.

Par ailleurs, les giravions évoluent très souvent à très basse altitude. Notamment, dans le cadre des missions de recherche et de sauvetage en mer, des giravions sont utilisés quotidiennement pour secourir des naufragés. Pour ces missions de recherche et de sauvetage, un giravion doit pouvoir intervenir en toute sécurité en réalisant un vol stationnaire ou à basses vitesses et à très basse altitude, dans un environnement souvent agité, avec par exemple une mer formée, un fort vent, une faible visibilité. Des opérations de treuillage d'équipes de secours, de rapatriement de naufragés sont réalisées à partir des giravions sur des bateaux ou bien directement en mer.

Pour permettre la réalisation de telles interventions de secours, le giravion doit être mis en vol stationnaire à la verticale des naufragés ou bien en vol d'avancement à basses vitesses lorsque ces naufragés se trouvent sur un bateau en mouvement. De tels vols stationnaires ou à basses vitesses sont des phases de vol sollicitant fortement les moteurs du giravion. De fait, les giravions utilisés pour ces missions comportent généralement au moins deux moteurs afin de fournir une puissance suffisante et de pallier une éventuelle panne de l'un des moteurs.

Cependant, si une panne d'un moteur se produit lors d'une telle intervention de secours, le giravion peut se trouver en situation dangereuse à cause de sa faible altitude et de sa faible vitesse d'avancement.

En effet, lors d'une panne d'un moteur, le giravion doit rapidement rejoindre un domaine de vitesse par rapport à l'air lui permettant de se maintenir à une altitude constante, voire de légèrement monter, avec la puissance disponible sur le ou les moteurs restant fonctionnels. Sur un giravion, la puissance nécessaire au maintien d'une altitude dépend des conditions de vol du giravion, notamment de la vitesse par rapport à l'air du giravion, mais également de la température extérieure, de la pression atmosphérique, désignée également « altitude-pression », et de la masse courante du giravion.

Dès lors, dans le cas où la panne d'un moteur intervient lors d'un vol stationnaire ou à faible vitesse d'avancement, le giravion doit être rapidement accéléré pour atteindre une vitesse par rapport à l'air minimale, cette rapide accélération entraînant une perte d'altitude du giravion.

Toutefois, afin de compenser une panne d'un moteur, chaque moteur restant opérationnel est amené à fonctionner selon des modes spéciaux désignés par l'acronyme *OEI* pour la désignation en langue anglaise « One Engine Inoperative » et dans lesquelles un surplus de puissance mécanique de sécurité est disponible pendant un temps limité. Dès lors, l'utilisation de ces modes spéciaux *OEI* permet de limiter cette perte d'altitude sans la supprimer pour autant. Cette perte d'altitude constitue donc une distance de sécurité du giravion permettant au giravion d'atteindre la vitesse par rapport à l'air minimale en cas de panne d'un moteur et garantissant en conséquence la réalisation d'un vol stationnaire ou à faible vitesse d'avancement de façon sécuritaire, cette distance de sécurité étant prise verticalement, à savoir parallèlement à la direction de la gravité terrestre.

En conséquence, il est donc important, voire essentiel en termes de sécurité, pour l'équipage d'un giravion de savoir à tout moment, et en particulier lorsque le giravion évolue avec une basse vitesse par rapport à l'air, voire nulle, qu'elle serait la perte d'altitude correspondant aux conditions de vol courantes du giravion lui permettant d'atteindre cette vitesse par rapport à l'air minimale en cas de panne d'un moteur.

De très nombreux essais sont réalisés lors du développement et de la certification d'un giravion afin de démontrer les performances du giravion après une panne d'un moteur et de déterminer ces pertes d'altitude en fonction des différentes conditions de vol que peut rencontrer le giravion. Ces pertes d'altitude dépendent notamment de la masse du giravion, des conditions de vent, de la manœuvre exécutée par le pilote du giravion ainsi que des performances du ou des moteurs restant opérationnels, performances qui dépendent elles-mêmes des conditions de température et de pression atmosphérique statique autour du giravion. Ces pertes d'altitude constituent des hauteurs, dites de "fly-away", qui sont alors consignées dans le manuel de vol de ce giravion sous forme d'abaques.

Cependant, l'équipage d'un giravion peut ne pas être en mesure de « ré-estimer » précisément la valeur de cette hauteur de "fly-away" lors d'un vol à faibles vitesses d'avancement ou bien lorsqu'il arrive à proximité d'un vol stationnaire. De plus, lors d'une intervention de secours en mer, la variation de la hauteur de la surface libre d'eau due aux vagues peut rendre la lecture de l'échelle de hauteur radioaltimétrique sur un instrument d'affichage de bord du giravion trompeuse. Notamment, lorsque le giravion est situé à la verticale d'un creux de vague, le pilote peut croire qu'il dispose d'une distance verticale suffisante en cas de panne d'un moteur alors qu'il importe surtout de savoir la position du giravion par rapport au sommet des vagues, l'écart entre le creux et le sommet des vagues pouvant être de plusieurs mètres.

Afin de faciliter la prise en compte de cette distance de sécurité, les abaques du manuel de vol du giravion fournissant la perte d'altitude, qui est égale à cette distance de sécurité du giravion, suite à une panne d'un moteur en vol stationnaire en fonction de la pression atmosphérique, la température ainsi la masse courante et la vitesse par rapport à l'air du giravion peuvent être implémentées dans le calculateur de navigation du giravion, comme c'est le cas pour certains d'entre eux. Dès lors, le pilote peut avoir une estimation de cette distance de sécurité, mais sans corrélation directe avec sa position par rapport au sol ou à la surface libre d'eau que survole le giravion.

Par ailleurs, on connait dans l'arrière plan technologique de l'invention le document FR 2900385 qui décrit un procédé de pilotage d'un giravion qui comporte plusieurs moteurs entraînant au moins un rotor principal. Selon ce procédé, tant que le giravion n'a pas atteint une vitesse de montée optimale, une commande en tangage est déterminée de sorte que le giravion accélère selon un profil qui varie au cours de la phase de décollage, d'une part en fonction du temps écoulé et d'autre part en fonction de l'état de fonctionnement des moteurs et notamment en cas d'une panne de l'un des moteurs. Le procédé permet alors d'adapter ce profil d'accélération si une panne d'un moteur se produit lors de la phase de décollage et avant que le giravion n'atteigne la vitesse de montée optimale.

L'arrière plan technologique de l'invention comporte également la Publication NASA CR-2012-216037 « Aircraft Design Considerations to Meet One Engine Inoperative (OEI) Safety Requirements » et la Publication NASA CR-2012-216038 « One Engine Inoperative (OEI) and Autorotation for Heavy Lift Rotorcraft System » ainsi que les documents US 2008/0215197, US 9387938, US 2013/0221153, US 2009/0140885 et JP H07 43109.

Dès lors, la présente invention a pour but de permettre à l'équipage d'un giravion de savoir à chaque instant s'il dispose d'une distance de sécurité nécessaire et suffisante vis-à-vis de la surface libre d'eau malgré les fluctuations de hauteur dues aux vagues en cas de panne d'un moteur.

La présente invention a alors pour objets un procédé et un dispositif de détermination et d'affichage d'une distance de sécurité d'un giravion en prenant en compte la hauteur des vagues permettant de s'affranchir des limitations mentionnées ci-dessus. Ce procédé et ce dispositif sont destinés à des giravions comportant au moins deux moteurs et assignés à des interventions, notamment de secours et de sauvetage, réalisées au-dessus d'une surface libre d'eau, telle que la mer, un lac ou toute étendue d'eau.

Dans ce cadre, la présente invention propose tout d'abord un procédé de détermination et d'affichage d'une distance de sécurité $H_{FlyA}$ d'un giravion lors d'une panne d'un moteur du giravion, en prenant en compte la variation de hauteur des vagues au-dessus desquelles évolue le giravion, le procédé comportant les étapes suivantes :

- une première détermination d'une distance de sécurité $H_{FlyA}$ du giravion lors d'une panne d'un moteur du giravion selon des conditions courantes de vol du giravion,
- une deuxième détermination d'une position maximale des vagues au-dessus desquelles évolue le giravion, et
- un affichage de la distance de sécurité $H_{FlyA}$ et de la position maximale des vagues sur un instrument d'affichage d'une position verticale du giravion.

Afin de mettre en place le procédé selon l'invention, le giravion comporte:

- des dispositifs de détermination des conditions courantes de vol du giravion, ces conditions courantes de vol étant typiquement la pression atmosphérique et la température extérieure au giravion ainsi que la masse courante et la vitesse par rapport à l'air du giravion,
- un dispositif de mesure d'une hauteur courante relative $H_{Cur}$ du giravion par rapport aux vagues,
- au moins une mémoire stockant notamment des instructions de calcul et des données correspondant au fonctionnement du giravion, tels les abaques du manuel de vol du giravion,
- au moins un calculateur apte à exécuter les instructions de calcul, et
- au moins un instrument d'affichage de la position verticale du giravion.

Le giravion comporte au moins un dispositif de mesure d'une première altitude courante $Z_{Cur}$ du giravion.

La position maximale des vagues au-dessus desquelles évolue le giravion peut être constituée par une estimation de la position verticale, à savoir une position en hauteur, de la vague la plus haute parmi les vagues au-dessus desquelles évolue le giravion. Une telle position verticale est définie parallèlement à la direction de la gravité terrestre.

Cette position maximale des vagues est constituée, par exemple par une estimation de la position verticale de la vague la plus haute que le giravion est susceptible de survoler à l'instant courant ou bien par une estimation de la position verticale de la vague la plus haute que le giravion a survolée depuis le démarrage de l'intervention de secours.

L'instrument d'affichage du giravion sur lequel sont affichées la distance de sécurité $H_{FlyA}$ et la position maximale des vagues est par exemple un indicateur de l'altitude barométrique du giravion ou bien un indicateur de la hauteur relative du giravion par rapport au sol ou à la surface libre d'eau que survole le giravion. On entend par « hauteur courante relative » du giravion la distance verticale courante entre le giravion et le sol ou bien la surface libre d'eau.

L'altitude barométrique du giravion est fournie par un altimètre barométrique que comporte le giravion alors que la hauteur relative du giravion est fournie par un instrument de mesure du giravion désigné traditionnellement « radiosonde » ou « radioaltimètre » ou bien par d'autres types de radars.

Quel que soit cet instrument d'affichage de la position verticale du giravion, la distance de sécurité $H_{FlyA}$ est affichée en étant positionnée à la position maximale des vagues au-dessus desquelles évolue le giravion. La symbologie utilisée pour afficher cette distance de sécurité $H_{FlyA}$ est par exemple un bandeau correspondant à cette distance de sécurité $H_{FlyA}$ et dont la base, à savoir le côté inférieur, est positionnée à la position maximale des vagues.

De la sorte, tant que l'indication de la position courante du giravion se situe au-dessus de cette symbologie de la distance de sécurité $H_{FlyA}$, l'équipage du giravion sait avantageusement, par exemple lorsqu'il engage une intervention de secours, qu'il dispose d'une distance de sécurité suffisante en cas d'une panne d'un moteur. Cette distance de sécurité est avantageusement indiquée au pilote du giravion en tenant compte de la variation de hauteur de la surface libre d'eau due à la présence des vagues. Cette intervention de secours peut ainsi être engagée en toute sécurité, y compris si une panne d'un moteur survenait. A contrario, si l'indication de la position courante du giravion se situe en-dessous de cette symbologie de la distance de sécurité $H_{FlyA}$, l'équipage du giravion sait qu'il ne dispose pas d'une distance de sécurité suffisante en cas d'une panne d'un moteur et que l'altitude du giravion doit être augmentée avant d'engager une intervention de secours en sécurité.

Par ailleurs, la position maximale des vagues au-dessus desquelles évolue le giravion est définie par une altitude maximale $Z_{Max}$ des vagues, cette position maximale des vagues étant ainsi définie de façon absolue par rapport à une référence fixe, à savoir la surface libre moyenne d'eau formant notamment les mers et les océans. Une telle position maximale des vagues est en particulier utilisée lorsque l'instrument d'affichage de la position verticale du giravion utilisé par le procédé selon l'invention est un indicateur de l'altitude barométrique du giravion.

La position maximale des vagues est définie par une distance verticale maximale $H_{Max}$ de la crête des vagues par rapport à la position courante des vagues. Une telle position maximale des vagues est notamment utilisée lorsque cet instrument d'affichage est un indicateur de la hauteur relative du giravion par rapport au sol ou la surface libre d'eau que survole le giravion.

En outre, afin d'anticiper la présence d'une éventuelle vague plus haute que les vagues précédentes, une marge de sécurité $H_{Mrgn}$ peut être utilisée. Par exemple, la position de la base de la symbologie de la distance de sécurité $H_{FlyA}$ sur l'instrument d'affichage du giravion est définie par la position maximale des vagues au-dessus desquelles évolue le giravion à laquelle est ajoutée la marge de sécurité $H_{Mrgn}$.

La marge de sécurité $H_{Mrgn}$ peut être égale à une valeur constante prédéfinie avant le vol du giravion, par exemple 15 pieds (15ft), un pied étant égal à 0.3048 mètre. La marge de sécurité $H_{Mrgn}$ peut aussi être égale à une valeur modifiable par un pilote du giravion au cours de l'intervention de secours, notamment en fonction de l'état de la surface libre d'eau, notamment l'amplitude et la période des vagues. La marge de sécurité $H_{Mrgn}$ peut également être égale à un pourcentage prédéfini de la distance de sécurité $H_{FlyA}$, la marge de sécurité $H_{Mrgn}$ étant alors bornée par une valeur minimale prédéfinie. Ce pourcentage prédéfini est par exemple égal à 15% et la valeur minimale prédéfinie égale à 15 pieds.

La première détermination de la distance de sécurité $H_{FlyA}$ du giravion est réalisée en utilisant les abaques présents dans le manuel de vol du giravion et fournissant la distance de sécurité $H_{FLYA}$ du giravion en fonction des conditions de vol du giravion. Cette première détermination de la distance de sécurité $H_{FlyA}$ du giravion peut être réalisée en permanence ou bien uniquement lorsque le giravion évolue à basse vitesse, par exemple dès que la vitesse par rapport à l'air du giravion est inférieure ou égale à un seuil de vitesse. Ce seuil de vitesse est par exemple égal à la vitesse dite de "sécurité au décollage" du giravion désignée par l'acronyme « VSD » ou bien par l'acronyme « VTOSS » pour la désignation en langue anglaise « Take-Off Safety Speed ». De fait, ce seuil de vitesse varie d'un giravion à l'autre et est par exemple égal à 45 nœuds, un nœud étant égal à 1.852 kilomètre par heure.

Dès lors, cette première détermination de la distance de sécurité $H_{FlyA}$ du giravion comporte les sous-étapes suivantes :

- une étape préliminaire de traduction logicielle des abaques fournissant la distance de sécurité $H_{FlyA}$ du giravion selon des conditions de vol du giravion, cette étape préliminaire étant réalisée lors de l'implantation du procédé selon l'invention dans le giravion.
- des sous-étapes de détermination des conditions courantes de vol du giravion, et
- une étape finale d'estimation de la distance de sécurité $H_{FlyA}$ du giravion à partir des conditions courantes de vol du giravion et des abaques.

Les abaques sont stockés dans au moins une mémoire du giravion et un calculateur du giravion estime la distance de sécurité $H_{FlyA}$ selon les valeurs courantes des conditions de vol mesurées ou estimées.

Les sous-étapes de détermination des conditions courantes de vol du giravion comportent :

- une première mesure d'une température extérieure au giravion,
- une deuxième mesure d'une pression atmosphérique extérieure au giravion,
- une troisième mesure d'une vitesse par rapport à l'air du giravion, et
- une troisième détermination d'une masse courante du giravion.

La pression atmosphérique et la température extérieure au giravion sont mesurées par des capteurs dédiés classiquement présents sur un giravion.

La vitesse par rapport à l'air du giravion peut être mesurée en totalité, à savoir en trois dimensions, ou bien uniquement selon une direction longitudinale du giravion. En effet, les pilotes réalisent de préférence ce type d'intervention de secours en mettant le nez du giravion face au vent de sorte à réduire sa sensibilité aux turbulences. Dès lors, cette composante longitudinale de la vitesse par rapport à l'air du giravion constitue généralement une bonne approximation de la vitesse totale par rapport à l'air du giravion qui est suffisante pour le procédé selon l'invention.

La vitesse par rapport à l'air du giravion peut être mesurée par un anémomètre par exemple de type à sonde Pitot, de type *VIMI* tel que décrit dans les documents FR 2282644 et FR 2567270, de type à ultrasons ou bien de type *LIDAR* d'après l'expression en langue anglaise « LIght Détection and Ranging ».

Enfin, la masse courante du giravion peut être estimée par un dispositif dédié ou bien directement par l'équipage du giravion, typiquement en soustrayant d'une masse au décollage la masse de carburant consommé ainsi qu'en prenant en compte les passagers et les charges utiles éventuellement embarqués ou bien débarqués.

Par la suite, la deuxième détermination de la position maximale des vagues au-dessus desquelles évolue le giravion comporte :

- une initialisation d'une altitude maximale $Z_{Max}$ des vagues au-dessus desquelles évolue le giravion,
- une quatrième mesure d'une hauteur courante relative $H_{Cur}$ du giravion par rapport aux vagues à une position prédéfinie par rapport au giravion,
- une cinquième mesure d'une première altitude courante $Z_{Cur}$ du giravion,
- une cinquième détermination d'une seconde altitude courante $Z_{Wav}$ des vagues à la position prédéfinie par rapport au giravion, la seconde altitude courante $Z_{Wav}$ étant égale à la différence de la première altitude courante $Z_{Cur}$ du giravion et de la hauteur courante relative $H_{Cur}$ telle que : $Z_{Wav} = Z_{Cur} - H_{Cur}$, et
- une première comparaison de l'altitude maximale $Z_{Max}$ et de la seconde altitude courante $Z_{Wav}$ permettant de définir une nouvelle valeur de l'altitude maximale $Z_{Max}$.

Cette initialisation de l'altitude maximale $Z_{Max}$ des vagues est réalisée lors du démarrage du procédé selon l'invention, par exemple lorsque le giravion se prépare à engager une intervention de secours. Lors de cette initialisation de l'altitude maximale $Z_{Max}$ des vagues, l'altitude maximale $Z_{Max}$ peut être définie nulle ou bien égale à la seconde altitude courante $Z_{Wav}$ des vagues. La seconde altitude courante $Z_{Wav}$ des vagues est l'altitude absolue des vagues, à savoir par rapport à la surface libre moyenne d'eau formant notamment les mers et les océans. De préférence, l'altitude maximale $Z_{Max}$ est définie, lors de cette initialisation, égale à la seconde altitude courante $Z_{Wav}$ des vagues.

En outre, la hauteur courante relative $H_{Cur}$ du giravion par rapport aux vagues est la distance verticale, à savoir définie parallèlement à la direction de la gravité terrestre, entre le giravion et la position courante des vagues constituant la surface libre d'eau survolée par le giravion. Cette position courante des vagues est située à la position prédéfinie par rapport au giravion.

Ensuite, la quatrième mesure d'une hauteur courante relative $H_{Cur}$ du giravion peut être fournie par un instrument de mesure de type radioaltimètre. Cette quatrième mesure de la hauteur courante relative $H_{Cur}$ peut également être fournie par d'autres types de radars, tel un dispositif de type à ultrasons ou bien de type *LIDAR*. Cette quatrième mesure de la hauteur courante relative $H_{Cur}$ est par exemple effectuée à la verticale du giravion, la position prédéfinie par rapport au giravion est alors située à la verticale du giravion. La position courante des vagues est alors située à la verticale du giravion, c'est notamment le cas avec un instrument de type radioaltimètre.

Cette quatrième mesure de la hauteur courante relative $H_{Cur}$ peut aussi être effectuée à une distance prédéfinie du giravion, de préférence en avant du giravion, la position prédéfinie par rapport au giravion est alors située à cette distance prédéfinie du giravion. La position courante des vagues est alors située à cette distance prédéfinie du giravion. Une telle quatrième mesure en avant du giravion est possible par exemple avec un dispositif de type à ultrasons ou bien de type *LIDAR* et permet avantageusement d'anticiper l'arrivée des vagues au-dessus desquelles évolue le giravion.

La cinquième mesure de la première altitude courante $Z_{Cur}$ du giravion peut être effectuée par l'intermédiaire d'un altimètre fournissant une mesure de l'altitude barométrique, par l'intermédiaire d'un récepteur GNSS pour la désignation en langue anglaise « Global Navigation Satellite System » fournissant une altitude absolue par rapport à la surface libre moyenne d'eau formant notamment les mers et les océans ou bien par intégration d'une vitesse verticale du giravion.

La cinquième détermination de la seconde altitude courante $Z_{Wav}$ des vagues est ainsi définie, à la position prédéfinie par rapport au giravion où a été mesurée la hauteur courante relative $H_{Cur}$, par la différence de la première altitude courante $Z_{Cur}$ du giravion et de la hauteur courante relative $H_{Cur}$, telle que :

$$Z_{Wav} = Z_{Cur} - H_{Cur}.$$

L'altitude maximale $Z_{Max}$ est enfin définie par la première comparaison de cette altitude maximale $Z_{Max}$ et de la seconde altitude courante $Z_{Wav}$ des vagues.

L'altitude maximale $Z_{Max}$ peut alors être définie comme la valeur maximale atteinte par la seconde altitude courante $Z_{Wav}$ des vagues durant la totalité de l'intervention de secours réalisée par le giravion. De la sorte, lorsque l'altitude maximale $Z_{Max}$ est inférieure à la seconde altitude courante $Z_{Wav}$ des vagues, l'altitude maximale $Z_{Max}$ prend la valeur de la seconde altitude courante $Z_{Wav}$, et lorsque l'altitude maximale $Z_{Max}$ est supérieure ou égale à la seconde altitude courante $Z_{Wav}$ des vagues, l'altitude maximale $Z_{Max}$ ne change pas de valeur.

L'altitude maximale $Z_{Max}$ peut également être définie par un filtre à longue constante de temps. Dans ce cas, lorsque l'altitude maximale $Z_{Max}$ est inférieure ou égale à la seconde altitude courante $Z_{Wav}$ des vagues, l'altitude maximale $Z_{Max}$ prend la valeur de la seconde altitude courante $Z_{Wav}$, le filtre à longue constante de temps étant alors initialisé, et ensuite, tant que l'altitude maximale $Z_{Max}$ est supérieure à la seconde altitude courante $Z_{Wav}$ des vagues, l'altitude maximale $Z_{Max}$ évolue selon une courbe décroissante prédéfinie.

L'expression "longue constante de temps" doit être comprise en relation avec la durée séparant deux vagues, correspondant à la période des vagues. Cette période des vagues est typiquement comprise entre 7 et 12 secondes et la courbe décroissante prédéfinie du filtre doit suivre une constante de temps plusieurs fois supérieure à cette période des vagues. Par exemple, la constante de temps est comprise entre 120 secondes et plusieurs minutes. En effet, un temps d'observation de quelques minutes permet une bonne estimation de la position maximale des vagues, d'autant que cette observation peut commencer bien avant la mise en vol stationnaire du giravion, lors du vol d'approche de la zone de l'intervention.

Cette courbe décroissante prédéfinie peut comporter tout d'abord un palier horizontal pendant lequel l'altitude maximale $Z_{Max}$ est constante sur une durée prédéterminée, typiquement de l'ordre d'une ou deux périodes de vagues, avant de décroître lentement. Un tel palier horizontal évite notamment des variations répétées de l'altitude maximale $Z_{Max}$ entre deux vagues.

Cette courbe décroissante prédéfinie peut décroître de façon régulière avec une pente constante dépendante de la différence entre l'altitude maximale $Z_{Max}$ et la seconde altitude courante $Z_{Wav}$ des vagues. Cette courbe décroissante prédéfinie peut également avoir une allure exponentielle décroissante dont la pente initiale peut dépendre de la différence entre l'altitude maximale $Z_{Max}$ et la seconde altitude courante $Z_{Wav}$.

Par exemple, l'altitude $Z$ suit une loi exponentielle $Z(t)$ lorsque cette loi exponentielle satisfait d'une part l'équation différentielle suivante, $Z_{Final} = \tau . \dot{Z}(t) + Z(t)$, $\tau$ étant une constante, et d'autre part pour laquelle, à l'instant initial $t_{Initial}$, $Z_{Initial} = Z(t_{Initial})$ et la dérivée d'altitude ou "pente de décroissance" vaut

$$\dot{Z}(t_{Initial}) = \frac{Z_{Final} - Z_{Initial}}{\tau}.$$

Le terme $\tau$ est une constante de temps homogène à une durée et est exprimé en secondes. Cette constante de temps $\tau$ peut s'interpréter comme un horizon de temps de filtrage, représentant l'inverse de la pulsation caractéristique des pôles du filtre ou de la fonction de transfert considérée, cette pulsation étant exprimée en radians par seconde.

Lors de la deuxième détermination de la position maximale des vagues, les mesures ainsi que la cinquième détermination de la seconde altitude courante $Z_{Wav}$ des vagues et la première comparaison de l'altitude maximale $Z_{Max}$ et de la seconde altitude courante $Z_{Wav}$ des vagues peuvent être réalisées de façon continue ou bien avec une fréquence d'échantillonnage. Cette fréquence d'échantillonnage est de préférence définie de sorte à être supérieure, voire nettement supérieure à la fréquence des vagues. Typiquement, cette fréquence d'échantillonnage est égale à 10 Hertz.

La deuxième détermination de la position maximale des vagues permet ainsi d'obtenir directement comme position maximale des vagues l'altitude maximale $Z_{Max}$ des vagues.

Cette altitude maximale $Z_{Max}$ des vagues peut alors être utilisée pour afficher la symbologie de la distance de sécurité $H_{FlyA}$ sur un indicateur de l'altitude barométrique du giravion, la base de cette symbologie de la distance de sécurité $H_{FlyA}$ étant positionnée à cette altitude maximale $Z_{Max}$.

Lorsque la première altitude courante $Z_{Cur}$ du giravion n'est pas fournie par un altimètre barométrique, un recalage entre la première altitude courante $Z_{Cur}$ du giravion et l'échelle de cet indicateur de l'altitude barométrique du giravion est nécessaire pour l'affichage de l'altitude maximale $Z_{Max}$. Une valeur de correction d'échelle $V_{Corr}$ égale à une différence entre l'altitude barométrique $Z_{Bar}$ et la première altitude courante $Z_{Cur}$ du giravion est alors prise en compte, telle que : $V_{Corr} = Z_{Bar} - Z_{Cur}$.

La position de la base de la symbologie correspondant à la distance de sécurité $H_{FlyA}$ est alors : $Z_{Max} + Z_{Bar} - Z_{Cur}$.

Lorsqu'une marge de sécurité $H_{Mrgn}$ est prise en compte, la position de la base de la symbologie correspondant à la distance de sécurité $H_{FlyA}$ est alors : $Z_{Max} + Z_{Bar} - Z_{Cur} + H_{Mrgn}$.

Par ailleurs, lorsque la position maximale des vagues est une distance verticale maximale $H_{Max}$ de la crête des vagues par rapport à la position courante des vagues, la deuxième détermination de la position maximale des vagues comporte une étape supplémentaire de sixième détermination de la distance verticale maximale $H_{Max}$. Au cours de cette sixième détermination de la distance verticale maximale $H_{Max}$, une valeur de transfert d'échelle entre le repère en altitude et le repère en hauteur relative égale à la seconde altitude courante $Z_{Wav}$ des vagues est soustraite à l'altitude maximale $Z_{Max}$ afin d'obtenir cette distance verticale maximale $H_{Max}$. Cette distance verticale maximale $H_{Max}$ est de fait égale à la différence entre l'altitude maximale $Z_{Max}$ et la seconde altitude courante $Z_{Wav}$ des vagues telle que :

$$H_{Max} = Z_{Max} - Z_{Wav} = Z_{Max} - (Z_{Cur} - H_{Cur}).$$

La symbologie de la distance de sécurité $H_{FlyA}$ peut alors être affichée sur l'indicateur de la hauteur relative du giravion par rapport au sol ou la surface libre d'eau, la base de cette symbologie de la distance de sécurité $H_{FlyA}$ étant positionnée à cette distance verticale maximale $H_{Max}$ vis-à-vis de la référence de cet indicateur de la hauteur relative du giravion, cette référence représentant la surface libre d'eau dans le cas présent.

Lorsqu'une marge de sécurité $H_{Mrgn}$ est prise en compte, la position de la base de la symbologie correspondant à la distance de sécurité $H_{FlyA}$ est alors : $Z_{Max} - (Z_{Cur} - H_{Cur}) + H_{Mrgn}$.

L'invention a également pour objet un dispositif de détermination et d'affichage d'une distance de sécurité $H_{FlyA}$ d'un giravion lors d'une panne d'un moteur du giravion en prenant en compte la variation de hauteur des vagues au-dessus desquelles évolue le giravion, le dispositif comportant :

- des dispositifs de détermination des conditions courantes de vol du giravion,
- un dispositif de mesure d'une hauteur courante relative $H_{Cur}$ relative du giravion par rapport aux vagues à une position prédéfinie par rapport au giravion,
- au moins un dispositif de mesure d'une première altitude courante $Z_{Cur}$ du giravion,
- au moins une mémoire stockant des instructions de calcul, des abaques fournissant la distance de sécurité $H_{FlyA}$ du giravion selon des conditions de vol du giravion, l'altitude maximum $Z_{Max}$ et éventuellement, le cas échéant, une masse au décollage du giravion,
- au moins un calculateur apte à exécuter les instructions de calcul, et
- au moins un instrument d'affichage d'une position verticale du giravion.

Ce dispositif permet alors la mise en œuvre du procédé précédemment décrit afin d'afficher sur l'instrument d'affichage une symbologie correspondant à la distance de sécurité $H_{FlyA}$ dont la base est positionnée à la position maximale des vagues, avec la prise en compte éventuelle d'une marge de sécurité $H_{Mrgn}$.

L'invention et ses avantages apparaîtront avec plus de détails dans le cadre de la description qui suit avec des exemples de réalisation donnés à titre illustratif en référence aux figures annexées qui représentent :

- la figure 1, un giravion muni d'un dispositif de détermination et d'affichage d'une distance de sécurité d'un giravion en prenant en compte la hauteur des vagues,
- la figure 2, un schéma synoptique d'un procédé de détermination et d'affichage d'une distance de sécurité d'un giravion en prenant en compte la hauteur des vagues,
- les figures 3 et 4, une vue d'un instrument d'affichage d'une position verticale du giravion, et
- les figures 5 et 6, deux exemples de variation de l'altitude maximale des vagues.

Les éléments présents dans plusieurs figures distinctes sont affectés d'une seule et même référence.

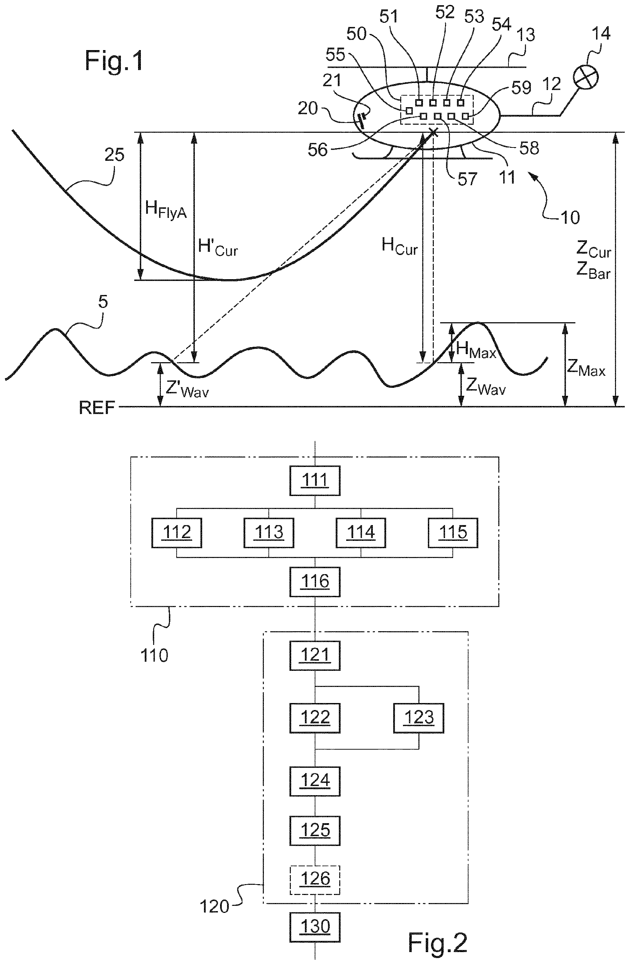

La figure 1 représente un giravion 10, désigné également « aéronef à voilure tournante » évoluant au-dessus d'une surface libre d'eau 5. Ce giravion 10 comporte notamment un fuselage 11, une poutre de queue 12, un rotor principal 13 assurant sa sustentation, voire sa propulsion, et un rotor arrière 14 positionné à l'arrière de la poutre de queue 12 ainsi que deux moteurs non représentés. Ce giravion 10 est destiné notamment à la réalisation de missions de recherche et de sauvetage en mer. Au cours des interventions de secours, le giravion 10 doit intervenir en toute sécurité en réalisant un vol stationnaire ou à basses vitesses et à très basse altitude, dans un environnement souvent agité, avec en particulier une surface libre d'eau agitée et éventuellement une faible visibilité.

Ce giravion 10 comporte également un dispositif 50 de détermination et d'affichage d'une distance de sécurité

$H_{FlyA}$ d'un giravion en prenant en compte la hauteur des vagues ainsi qu'un tableau de bord 20 muni d'un instrument d'affichage 21 d'une position verticale du giravion 10. Le dispositif 50 de détermination et d'affichage d'une distance de sécurité $H_{FlyA}$ d'un giravion comporte des dispositifs de détermination 51-54 des conditions courantes de vol du giravion 10, à savoir un premier capteur 51 mesurant une température extérieure au giravion 10, un second capteur 52 mesurant une pression atmosphérique extérieure au giravion 10, un anémomètre 53 mesurant une vitesse par rapport à l'air du giravion 10 et un dispositif 54 de détermination d'une masse courante du giravion 10.

Le dispositif 50 de détermination et d'affichage d'une distance de sécurité $H_{FlyA}$ d'un giravion comporte également un dispositif de mesure 55 mesurant une hauteur courante relative $H_{Cur}$ du giravion 10 par rapport au sol ou à la surface libre d'eau que survole le giravion, au moins un dispositif de mesure 56-57 d'une première altitude courante $Z_{Cur}$ du giravion 10, une mémoire 58 et un calculateur 59. La mémoire 58 stocke notamment des instructions de calcul que le calculateur 59 est apte à exécuter.

Le dispositif 50 de détermination et d'affichage d'une distance de sécurité $H_{FlyA}$ d'un giravion utilise également l'instrument d'affichage 21 du giravion 10. Par ailleurs, les dispositifs de détermination 51-54 des conditions courantes de vol du giravion 10, le dispositif de mesure 55 d'une hauteur courante relative $H_{Cur}$ du giravion 10 et chaque dispositif de mesure 56-57 d'une première altitude courante $Z_{Cur}$ du giravion 10 peuvent être partagés avec d'autres équipements du giravion 10.

Le dispositif de mesure 55 d'une hauteur courante relative $H_{Cur}$ du giravion 10 par rapport aux vagues peut être un radioaltimètre réalisant cette mesure sensiblement à la verticale du giravion 10. Ce dispositif de mesure 55 d'une hauteur courante relative $H_{Cur}$ du giravion 10 peut également être un dispositif de type à ultrasons ou bien de type LIDAR permettant d'effectuer cette mesure à une distance prédéfinie du giravion, de préférence en avant du giravion, afin avantageusement d'anticiper l'arrivée des vagues au-dessus desquelles évolue le giravion 10.

Le dispositif de mesure 56-57 de la première altitude courante $Z_{Cur}$ du giravion 10 peut être un récepteur GNSS 56, pour la désignation en langue anglaise « Global Navigation Satellite System », fournissant une altitude absolue par rapport à la surface libre moyenne d'eau formant notamment les mers et les océans ou bien un altimètre 57 fournissant une mesure d'altitude barométrique. La première altitude courante $Z_{Cur}$ du giravion 10 peut aussi être obtenue par intégration d'une vitesse verticale du giravion 10.

La mémoire 58 stocke des instructions de calcul permettant notamment la mise en œuvre du procédé de détermination et d'affichage d'une distance de sécurité $H_{FlyA}$ d'un giravion en prenant en compte la hauteur des vagues dont un schéma synoptique est représenté sur la figure 2.

Ce procédé comporte trois étapes principales :

- une première détermination 110 d'une distance de sécurité $H_{FlyA}$ du giravion 10 lors d'une panne d'un moteur du giravion 10 selon des conditions courantes de vol du giravion 10,
- une deuxième détermination 120 d'une position maximale des vagues au-dessus desquelles évolue le giravion 10, et
- un affichage 130 de la distance de sécurité $H_{FlyA}$ et de la position maximale sur l'instrument d'affichage 21.

La première détermination 110 de la distance de sécurité $H_{FlyA}$ du giravion 10 comporte une étape préliminaire 111, réalisée lors de l'implantation du procédé selon l'invention dans le giravion 10, cette étape préliminaire 111 consistant en une traduction logicielle des abaques fournissant la distance de sécurité $H_{FlyA}$ du giravion 10 selon des conditions de vol du giravion 10. La mémoire 58 stocke ces abaques fournissant la distance de sécurité $H_{FlyA}$ du giravion 10 selon des conditions de vol du giravion 10.

La distance de sécurité $H_{FlyA}$, représentée sur la figure 1 est la perte d'altitude nécessaire au giravion 10 pour atteindre selon une trajectoire de vol 25, suite à une panne d'un moteur du giravion 10, une vitesse suffisante afin que le giravion 10 puisse se maintenir à une altitude constante, voire monter légèrement, avec la puissance disponible sur le moteur restant fonctionnel.

La première détermination 110 de la distance de sécurité $H_{FlyA}$ du giravion 10 comporte également des sous-étapes 112-115 de détermination des conditions courantes de vol du giravion 10 :

- une première mesure 112 d'une température extérieure au giravion 10, effectuée par l'intermédiaire du premier capteur 51,
- une deuxième mesure 113 d'une pression atmosphérique extérieure au giravion 10 effectuée par l'intermédiaire du second capteur 52,
- une troisième mesure 114 d'une vitesse par rapport à l'air du giravion 10 effectuée par l'intermédiaire de l'anémomètre 53, et
- une troisième détermination 115 d'une masse courante du giravion 10 effectuée par l'intermédiaire du dispositif 54 de détermination d'une masse courante du giravion 10.

La troisième détermination 115 d'une masse courante du giravion 10 peut également être réalisée directement par l'équipage du giravion 10 en soustrayant d'une masse au décollage la masse de carburant consommé ainsi qu'en prenant en compte les passagers et les charges utiles éventuellement embarqués ou bien débarqués. La mémoire 58 stocke alors la masse au décollage du giravion 10.

La première détermination 110 de la distance de sécurité $H_{FlyA}$ du giravion 10 comporte enfin une étape finale 116 d'estimation de la distance de sécurité $H_{FlyA}$ du giravion 10 effectuée par le calculateur 59, à partir des conditions courantes de vol du giravion 10 et des abaques.

Par ailleurs, la position maximale des vagues au-dessus desquelles évolue le giravion, déterminée lors de la deuxième détermination 120, peut être définie par une altitude maximale $Z_{Max}$ des vagues ou bien par une distance verticale maximale $H_{Max}$ de la crête des vagues par rapport à la position courante des vagues. L'altitude maximale $Z_{Max}$ des vagues est définie de façon absolue par rapport à une référence REF fixe et est utilisée pour un instrument d'affichage 21 indiquant notamment l'altitude barométrique du giravion 10. La distance verticale maximale $H_{Max}$ des vagues est utilisée lorsque cet instrument d'affichage 21 est un indicateur de la hauteur relative du giravion par rapport au sol ou à la surface libre d'eau que survole le giravion.

La référence REF ainsi que l'altitude maximale $Z_{Max}$ des vagues et la distance verticale maximale $H_{Max}$ de la crête des vagues par rapport à la position courante des vagues sont représentées sur la figure 1. La référence REF est généralement constituée par la surface libre moyenne d'eau formant notamment les mers et les océans.

En outre, la distance verticale maximale $H_{Max}$ de la crête des vagues par rapport à la position courante des vagues est déterminée par la différence entre l'altitude maximale $Z_{Max}$ et une seconde altitude courante $Z_{Wav}$ des vagues. De fait, quelle que soit cette position maximale des vagues, la deuxième détermination 120 de la position maximale des vagues au-dessus desquelles évolue le giravion 10 comporte tout d'abord une initialisation 121 d'une altitude maximale $Z_{Max}$ des vagues au-dessus desquelles évolue le giravion 10. Lors de cette initialisation 121, l'altitude maximale $Z_{Max}$ est définie de préférence égale à la seconde altitude courante $Z_{Wav}$ des vagues.

Ensuite, une quatrième mesure 122 d'une hauteur courante relative $H_{Cur}$ du giravion 10 par rapport aux vagues est réalisée à une position prédéfinie par rapport au giravion 10 par le dispositif de mesure 55. La position prédéfinie par rapport au giravion 10 peut être sensiblement à la verticale du giravion 10 ou bien à une distance prédéfinie du giravion 10, de préférence en avant du giravion 10, comme représenté sur la figure 1.

Une cinquième mesure 123 de la première altitude courante $Z_{Cur}$ du giravion 10 est réalisée, de préférence simultanément à la quatrième mesure 122, par l'intermédiaire du dispositif de mesure 56-57. Cette cinquième mesure 123 peut aussi être réalisée de façon séquentielle vis-à-vis de la quatrième mesure 122.

Suite à la quatrième mesure 122 et à la cinquième mesure 123, une cinquième détermination 124 d'une seconde altitude courante $Z_{Wav}$ des vagues à la position prédéfinie par rapport au giravion 10, correspondant à la position courante des vagues, est réalisée par le calculateur 59. Cette seconde altitude courante $Z_{Wav}$ est égale à la différence de la première altitude courante $Z_{Cur}$ et de la hauteur courante relative $H_{Cur}$ du giravion 10, telle que :

$$Z_{Wav} = Z_{Cur} - H_{Cur}.$$

Enfin, une première comparaison 125 de l'altitude maximale $Z_{Max}$ et de la seconde altitude courante $Z_{Wav}$ est réalisée par le calculateur 59 afin de définir une nouvelle valeur de l'altitude maximale $Z_{Max}$.

Lors de la première comparaison 125, lorsque l'altitude maximale $Z_{Max}$ est inférieure à la seconde altitude courante $Z_{Wav}$ des vagues, l'altitude maximale $Z_{Max}$ peut prendre la valeur de la seconde altitude courante $Z_{Wav}$, alors que l'altitude maximale $Z_{Max}$ est inchangée lorsque l'altitude maximale $Z_{Max}$ est supérieure ou égale à la seconde altitude courante $Z_{Wav}$ des vagues. De la sorte, l'altitude maximale $Z_{Max}$ est définie comme la valeur maximale atteinte par la seconde altitude courante $Z_{Wav}$ des vagues durant la totalité de l'intervention de secours réalisée par le giravion 10.

Lors de la première comparaison 125, l'altitude maximale $Z_{Max}$ peut également être définie afin de prendre en compte la variation, voire la baisse possible de l'amplitude des vagues. Dans ce but, lorsque l'altitude maximale $Z_{Max}$ est inférieure ou égale à la seconde altitude courante $Z_{Wav}$ des vagues, l'altitude maximale $Z_{Max}$ prend la valeur de la seconde altitude courante $Z_{Wav}$ et tant que l'altitude maximale $Z_{Max}$ est supérieure à la seconde altitude courante $Z_{Wav}$, l'altitude maximale $Z_{Max}$ évolue selon une courbe décroissante prédéfinie.

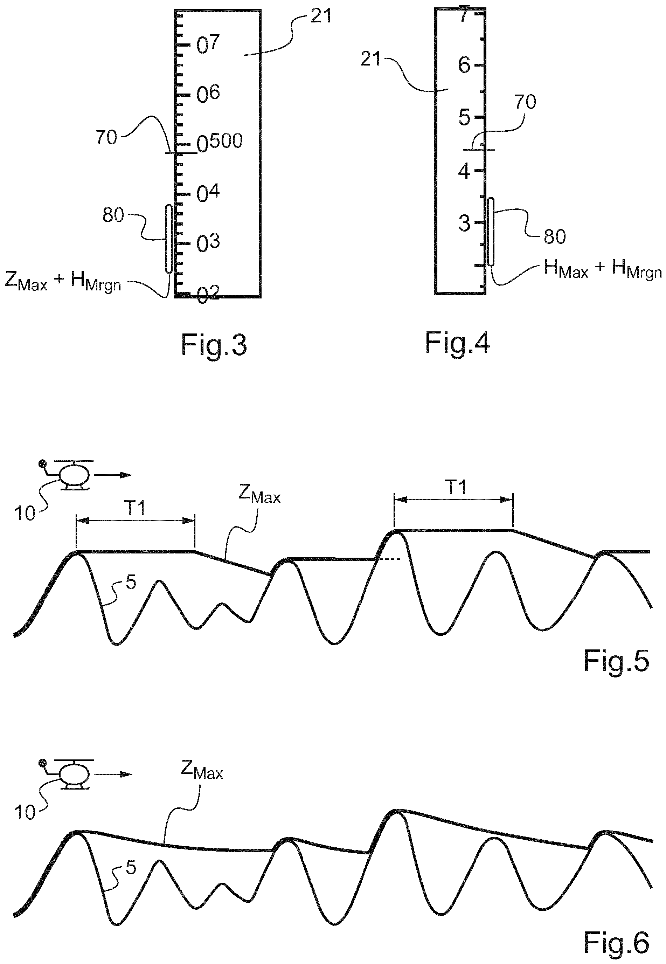

Deux exemples de variation de l'altitude maximale $Z_{Max}$ des vagues avec des courbes décroissantes prédéfinies sont représentés sur les figures 5 et 6.

Selon un premier exemple représenté sur la figure 5, la courbe décroissante prédéfinie comporte tout d'abord un palier horizontal pendant lequel l'altitude maximale $Z_{Max}$ est constante sur une durée prédéterminée $T_1$, typiquement de l'ordre d'une ou deux périodes de vagues, avant de décroître lentement et de façon régulière avec une pente constante dépendante de la différence entre l'altitude maximale $Z_{Max}$ et la seconde altitude courante $Z_{Wav}$ des vagues.

On constate alors que, tout d'abord, l'altitude maximale $Z_{Max}$ suit la surface libre d'eau 5 de seconde altitude courante $Z_{Wav}$ croissante, puis après la première crête d'une vague, l'altitude maximale $Z_{Max}$ est constante pendant la durée prédéterminée $T_1$, les vagues étant d'une amplitude plus faible durant cette durée déterminée $T_1$. Ensuite, l'altitude

9

maximale $Z_{Max}$ décroît avec une pente constante, tant que la seconde altitude courante $Z_{Wav}$ des vagues est inférieure à l'altitude maximale $Z_{Max}$. Dès que cette pente constante rencontre la surface libre d'eau 5, l'altitude maximale $Z_{Max}$ suit la surface libre d'eau 5, l'altitude maximale $Z_{Max}$ étant égale à la seconde altitude courante $Z_{Wav}$ des vagues qui est croissante. Dès que la seconde altitude courante $Z_{Wav}$ décroît de nouveau, l'altitude maximale $Z_{Max}$ suit un palier et est constante jusqu'à rencontrer une vague dont la seconde altitude courante $Z_{Wav}$ est supérieure ou égale à l'altitude maximale $Z_{Max}$. Par la suite, l'altitude maximale $Z_{Max}$ suit un palier et est constante pendant la durée prédéterminée $T_1$ puis décroît avec une pente constante, tant que la seconde altitude courante $Z_{Wav}$ des vagues est inférieure à la seconde altitude maximale $Z_{Max}$ des vagues.

Selon un second exemple représenté sur la figure 6, la courbe décroissante prédéfinie décroît avec une allure exponentielle décroissante. On constate alors que, comme précédemment, l'altitude maximale $Z_{Max}$ suit tout d'abord la surface libre d'eau 5 de seconde altitude courante $Z_{Wav}$ croissante, puis après à la première crête d'une vague, l'altitude maximale $Z_{Max}$ décroît selon la courbe décroissante prédéfinie à l'allure exponentielle décroissante, tant que la seconde altitude courante $Z_{Wav}$ des vagues est inférieure à l'altitude maximale $Z_{Max}$. Dès que cette courbe décroissante rencontre la surface libre d'eau 5, l'altitude maximale $Z_{Max}$ suit la surface libre d'eau 5, l'altitude maximale $Z_{Max}$ étant égale à la seconde altitude courante $Z_{Wav}$ des vagues qui est croissante. Dès que la seconde altitude courante $Z_{Wav}$ décroît de nouveau, l'altitude maximale $Z_{Max}$ décroît selon la courbe décroissante prédéfinie jusqu'à rencontrer une vague dont la seconde altitude courante $Z_{Wav}$ est supérieure ou égale à l'altitude maximale $Z_{Max}$.

Par ailleurs, lorsque la position maximale des vagues est la distance verticale maximale $H_{Max}$ de la crête des vagues par rapport à la position courante des vagues, la distance verticale maximale $H_{Max}$ est déterminée au cours d'une sixième détermination 126 de la distance verticale maximale $H_{Max}$ que comporte la deuxième détermination 120 de la position maximale des vagues en soustrayant la seconde altitude courante $Z_{Wav}$ des vagues à l'altitude maximale $Z_{Max}$ :

$$H_{Max} = Z_{Max} - Z_{Wav} = Z_{Max} - (Z_{Cur} - H_{Cur}).$$

En conséquence, le procédé de détermination et d'affichage d'une distance de sécurité $H_{FlyA}$ d'un giravion en prenant en compte la hauteur des vagues permet avantageusement de déterminer d'une part la distance de sécurité $H_{FlyA}$ selon les conditions courantes de vol du giravion 10 et d'autre part la position maximale des vagues que survole le giravion 10 pendant l'intervention de secours et de prendre en compte afin d'atteindre en sécurité, en cas d'une panne d'un moteur, la vitesse minimale requise avec un seul moteur fonctionnel.

La première détermination 110 d'une distance de sécurité $H_{FlyA}$ du giravion 10 et la deuxième détermination 120 d'une position maximale des vagues au-dessus desquelles évolue le giravion 10 peuvent être réalisées de façon séquentielle ou bien de façon simultanée.

Enfin, l'affichage 130 de la distance de sécurité $H_{FlyA}$ et de la position maximale des vagues sur l'instrument d'affichage 21 permet d'informer l'équipage du giravion 10 de cette distance de sécurité $H_{FlyA}$ en prenant en compte cette position maximale des vagues. Cette distance de sécurité $H_{FlyA}$ est affichée sous la forme d'une symbologie 80 de type bandeau positionnée à la position maximale des vagues.

De la sorte, l'instrument d'affichage 21 affichant également un repère 70 représentant la position du giravion 10, l'équipage du giravion 10 visualise immédiatement et sans action de sa part, avant de débuter une intervention de secours, si une distance de sécurité $H_{FlyA}$ suffisante est disponible en cas d'une panne d'un moteur. De plus, cette distance de sécurité $H_{FlyA}$ est affichée et mise à jour pendant l'intervention de secours en prenant avantageusement en compte les variations des conditions courantes de vol et les variations de hauteur des vagues permettant à cette intervention de secours d'être réalisée en toute sécurité, même si une panne d'un moteur se produit.

L'instrument d'affichage 21 peut être un indicateur de l'altitude barométrique du giravion 10, comme représenté sur la figure 3, la position maximale des vagues étant l'altitude maximale $Z_{Max}$ des vagues, ou bien un indicateur de la hauteur relative du giravion 10 par rapport au sol ou la surface libre d'eau que survole le giravion 10, comme représenté sur la figure 4, la position maximale des vagues étant la distance verticale maximale $H_{Max}$ de la crête des vagues par rapport à la position courante des vagues.

Lorsque l'instrument d'affichage 21 affiche une altitude barométrique du giravion 10 et que la première altitude courante $Z_{Cur}$ du giravion 10 n'est pas fournie par un altimètre barométrique, une valeur de correction d'échelle égale à une différence entre l'altitude barométrique $Z_{Bar}$ et la première altitude courante $Z_{Cur}$ du giravion 10 est ajoutée à l'altitude maximum $Z_{Max}$ pour l'affichage 130 de la symbologie 80.

En outre, dans les deux cas, une marge de sécurité $H_{Mrgn}$ peut être ajoutée à la position maximale des vagues, à savoir l'altitude maximum $Z_{Max}$ ou bien la distance verticale maximale $H_{Max}$.

Naturellement, la présente invention dont l'objet est défini par les présentes revendications, est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

**Revendications**

1. Procédé de détermination et d'affichage d'une distance de sécurité ($H_{FlyA}$) d'un giravion (10), en prenant en compte la variation de hauteur des vagues au-dessus desquelles évolue ledit giravion (10), ledit giravion (10) comportant au moins deux moteurs et

   - des dispositifs de détermination (51-54) desdites conditions courantes de vol dudit giravion (10),
   - un dispositif de mesure (55) d'une hauteur courante relative ($H_{Cur}$) dudit giravion (10) par rapport auxdites vagues à une position prédéfinie par rapport audit giravion (10),
   - au moins un dispositif de mesure (56-57) d'une première altitude courante ($Z_{Cur}$) dudit giravion (10),
   - au moins une mémoire (58) stockant des instructions de calcul, des abaques fournissant ladite distance de sécurité ($H_{FlyA}$) dudit giravion (10) selon des conditions de vol dudit giravion (10), une altitude maximum ($Z_{Max}$) et le cas échéant une masse au décollage dudit giravion (10),
   - au moins un calculateur (59) apte à exécuter lesdites instructions de calcul, et
   - au moins un instrument d'affichage (21) d'une position verticale dudit giravion (10),

   ledit procédé comportant une étape d'une première détermination (110) d'une distance de sécurité ($H_{FlyA}$) dudit giravion (10) selon des conditions courantes de vol dudit giravion (10), ladite distance de sécurité ($H_{FlyA}$) étant égale à une perte d'altitude nécessaire audit giravion (10) pour atteindre une vitesse minimale suite à une panne d'un desdits moteurs dudit giravion (10),
   **caractérisé en ce que** ledit procédé comporte les étapes suivantes :

   - une deuxième détermination (120) d'une position maximale desdites vagues au-dessus desquelles évolue ledit giravion (10), ladite position maximale étant une estimation de la position verticale de la vague la plus haute parmi lesdites vagues, et
   - un affichage (130) de ladite distance de sécurité ($H_{FlyA}$) et de ladite position maximale sur un instrument d'affichage (21) dudit giravion (10), et

   ladite première détermination (110) de ladite distance de sécurité ($H_{FlyA}$) dudit giravion (10) comportant les étapes suivantes :

   - une étape préliminaire (111) de traduction logicielle des abaques fournissant ladite distance de sécurité ($H_{FlyA}$) dudit giravion (10) selon des conditions de vol dudit giravion (10),
   - des sous-étapes (112-115) de détermination desdites conditions courantes de vol dudit giravion (10) :

     ◦ une première mesure (112) d'une température extérieure audit giravion (10),
     ◦ une deuxième mesure (113) d'une pression atmosphérique extérieure audit giravion (10),
     ◦ une troisième mesure (114) d'une vitesse par rapport à l'air dudit giravion (10), et
     ◦ une troisième détermination (115) d'une masse courante dudit giravion (10),

   - une étape finale (116) d'estimation de ladite distance de sécurité ($H_{FlyA}$) dudit giravion (10) à partir desdites conditions courantes de vol dudit giravion (10) et desdits abaques.

   ladite deuxième détermination (120) de ladite position maximale desdites vagues au-dessus desquelles évolue ledit giravion (10) comportant les étapes suivantes :

   - une initialisation (121) d'une altitude maximale ($Z_{Max}$) desdites vagues au-dessus desquelles évolue ledit giravion (10),
   - une quatrième mesure (122) d'une hauteur courante relative ($H_{Cur}$) dudit giravion (10) par rapport à une position courante desdites vagues à une position prédéfinie par rapport audit giravion (10),
   - une cinquième mesure (123) d'une première altitude courante ($Z_{Cur}$) dudit giravion (10),
   - une cinquième détermination (124) d'une seconde altitude courante ($Z_{Wav}$) desdites vagues à ladite position prédéfinie par rapport audit giravion (10), ladite seconde altitude courante ($Z_{Wav}$) étant égale à la différence de ladite première altitude courante ($Z_{Cur}$) dudit giravion (10) et de ladite hauteur courante relative ($H_{Cur}$) telle que :

$$Z_{Wav} = Z_{Cur} - H_{Cur},$$

- une première comparaison (125) de ladite altitude maximale $(Z_{Max})$ et de ladite seconde altitude courante $(Z_{Wav})$ desdites vagues permettant de définir une nouvelle valeur de ladite altitude maximale $(Z_{Max})$.

2. Procédé selon la revendication 1,
   **caractérisé en ce que** lors de ladite première comparaison (125), lorsque ladite altitude maximale $(Z_{Max})$ est inférieure à ladite seconde altitude courante $(Z_{Wav})$ desdites vagues, ladite altitude maximale $(Z_{Max})$ prend la valeur de ladite seconde altitude courante $(Z_{Wav})$ desdites vagues.

3. Procédé selon la revendication 1,

   **caractérisé en ce que** lors de ladite première comparaison (125), lorsque ladite altitude maximale $(Z_{Max})$ est inférieure ou égale à ladite seconde altitude courante $(Z_{Wav})$ desdites vagues, ladite altitude maximale $(Z_{Max})$ prend la valeur de ladite seconde altitude courante $(Z_{Wav})$ et
   tant que ladite altitude maximale $(Z_{Max})$ est supérieure à ladite seconde altitude courante $(Z_{Wav})$ desdites vagues, ladite altitude maximale $(Z_{Max})$ évolue selon une courbe décroissante prédéfinie.

4. Procédé selon la revendication 3,
   **caractérisé en ce que** ladite courbe décroissante prédéfinie comporte un palier horizontal pendant lequel ladite altitude maximale $(Z_{Max})$ est constante sur une durée prédéterminée avant de décroître.

5. Procédé selon la revendication 3,
   **caractérisé en ce que** ladite courbe décroissante prédéfinie a une allure exponentielle décroissante.

6. Procédé selon l'une quelconque des revendications 1 à 5,
   **caractérisé en ce que** ladite position prédéfinie par rapport audit giravion (10) est située à la verticale dudit giravion (10), ladite hauteur courante relative $(H_{Cur})$ étant mesurée à la verticale dudit giravion (10).

7. Procédé selon l'une quelconque des revendications 1 à 5,
   **caractérisé en ce que** ladite position prédéfinie par rapport audit giravion (10) est située à une distance prédéfinie dudit giravion (10), ladite hauteur courante relative $(H_{Cur})$ étant mesurée à ladite distance prédéfinie dudit giravion (10) afin d'anticiper lesdites vagues au-dessus desquelles évolue ledit giravion (10).

8. Procédé selon l'une quelconque des revendications 1 à 7,
   **caractérisé en ce que** lors dudit affichage (130), une symbologie (80) représentant ladite distance de sécurité $(H_{FlyA})$ est affichée sur ledit instrument d'affichage (21) dudit giravion (10) de sorte qu'une base de ladite symbologie (80) est positionnée à ladite position maximale desdites vagues.

9. Procédé selon l'une quelconque des revendications 1 à 7,
   **caractérisé en ce que** lors dudit affichage (130), une symbologie (80) représentant ladite distance de sécurité $(H_{FlyA})$ est affichée sur ledit instrument d'affichage (21) dudit giravion (10) de sorte qu'une base de ladite symbologie (80) est positionnée à ladite position maximale desdites vagues à laquelle est ajoutée une marge de sécurité $(H_{Mrgn})$.

10. Procédé selon l'une quelconque des revendications 1 à 9,
    **caractérisé en ce que**, lorsque ledit instrument d'affichage (21) affiche une altitude barométrique dudit giravion (10), ladite position maximale desdites vagues est ladite altitude maximum $(Z_{Max})$ à laquelle est ajoutée une valeur de correction d'échelle égale à une différence entre une altitude barométrique $(Z_{Bar})$ et une première altitude courante $(Z_{Cur})$ dudit giravion (10).

11. Procédé selon l'une quelconque des revendications 1 à 10,
    **caractérisé en ce que**, lorsque ledit instrument d'affichage (21) affiche une hauteur relative dudit giravion (10) par rapport à la surface libre d'eau que ledit giravion (10) survole, ladite position maximale desdites vagues est une distance verticale maximale $(H_{Max})$ d'une crête desdites vagues par rapport à une position courante desdites vagues égale à ladite altitude maximale $(Z_{Max})$ à laquelle est soustraite ladite seconde altitude courante $(Z_{Wav})$ desdites vagues, telle que : $H_{Max} = Z_{Max} - Z_{Wav} = Z_{Max} - (Z_{Cur} - H_{Cur})$.

12. Dispositif (50) de détermination et d'affichage d'une distance de sécurité $(H_{FlyA})$ d'un giravion (10) lors d'une panne d'un moteur dudit giravion (10) en prenant en compte la variation de hauteur desdites vagues au-dessus desquelles évolue ledit giravion (10), ledit giravion (10) comportant au moins deux moteurs, ladite distance de sécurité $(H_{FlyA})$

étant égale à une perte d'altitude nécessaire audit giravion (10) pour atteindre une vitesse minimale suite à une panne d'un desdits moteurs dudit giravion (10), ledit dispositif (50) comportant :

- des dispositifs de détermination (51-54) desdites conditions courantes de vol dudit giravion (10),
- un dispositif de mesure (55) d'une hauteur courante relative ($H_{Cur}$) dudit giravion (10) par rapport auxdites vagues à une position prédéfinie par rapport audit giravion (10),
- au moins un dispositif de mesure (56-57) d'une première altitude courante ($Z_{Cur}$) dudit giravion (10),
- au moins une mémoire (58) stockant des instructions de calcul, des abaques fournissant ladite distance de sécurité ($H_{FlyA}$) dudit giravion (10) selon des conditions de vol dudit giravion (10), une altitude maximum ($Z_{Max}$) et le cas échéant une masse au décollage dudit giravion (10),
- au moins un calculateur (59) apte à exécuter lesdites instructions de calcul, et
- au moins un instrument d'affichage (21) d'une position verticale dudit giravion (10),

**caractérisé en ce que** ledit dispositif (50) est configuré afin de mettre en œuvre le procédé selon l'une des revendications 1 à 11.


## Patentansprüche

1.  Verfahren zur Bestimmung und Anzeige eines Sicherheitsabstands ($H_{FlyA}$) eines Drehflügelflugzeugs (10) unter Berücksichtigung der Höhenschwankung von Wellen, über denen sich das Drehflügelflugzeug (10) bewegt, wobei das Drehflügelflugzeug (10) umfasst: mindestens zwei Motoren und

    - Vorrichtungen (51-54) zum Bestimmen der aktuellen Flugbedingungen des Drehflügelflugzeugs (10),
    - eine Vorrichtung (55) zum Messen einer aktuellen relativen Höhe ($H_{Cur}$) des Drehflügelflugzeugs (10) in Bezug auf die Wellen an einer in Bezug auf das Drehflügelflugzeug (10) vordefinierten Position,
    - mindestens eine Vorrichtung (56-57) zum Messen einer ersten aktuellen Höhe ($Z_{Cur}$) des Drehflügelflugzeugs (10),
    - mindestens einen Speicher (58), der Rechenanweisungen und Schemata speichert, die den Sicherheitsabstand des Drehflügelflugzeugs (10) gemäß den Flugbedingungen des Drehflügelflugzeugs (10), einer maximalen Höhe ($Z_{Max}$) und gegebenenfalls einer Startmasse des Drehflügelflugzeugs (10) angeben,
    - mindestens einen Rechner (59), der geeignet ist, die Rechenanweisungen auszuführen, und
    - mindestens ein Anzeigeinstrument (21) für eine vertikale Position des Drehflügelflugzeugs (10),

    wobei das Verfahren einen Schritt eines ersten Bestimmens (110) eines Sicherheitsabstands ($H_{FlyA}$) des Drehflügelflugzeugs (10) gemäß aktuellen Flugbedingungen des Drehflügelflugzeugs (10) umfasst, wobei der Sicherheitsabstand ($H_{FlyA}$) gleich einem Höhenverlust ist, den das Drehflügelflugzeug (10) benötigt, um nach einem Ausfall eines der Motoren des Drehflügelflugzeugs (10) eine Mindestgeschwindigkeit zu erreichen,
    **dadurch gekennzeichnet, dass** das Verfahren die folgenden Schritte umfasst:

    - zweites Bestimmen (120) einer maximalen Position der Wellen, über denen sich das Drehflügelflugzeug (10) bewegt, wobei die maximale Position eine Schätzung der vertikalen Position der höchsten Welle unter den Wellen ist, und
    - Anzeigen (130) des Sicherheitsabstands ($H_{FlyA}$) und der maximalen Position auf einem Anzeigeinstrument (21) des Drehflügelflugzeugs (10), und

    wobei das erste Bestimmen (110) des Sicherheitsabstands ($H_{FlyA}$) des Drehflügelflugzeugs (10) die folgenden Schritte umfasst:

    - einen vorbereitenden Schritt (111) der des Softwareumsetzens der Schemata, die den den Flugbedingungen des Drehflügelflugzeugs (10) entsprechenden Sicherheitsabstand ($H_{FlyA}$) des Drehflügelflugzeugs (10) angeben,
    - Unterschritte (112-115) des Bestimmens der aktuellen Flugbedingungen des Drehflügelflugzeugs (10):

        • erstes Messen (112) einer Außentemperatur des Drehflügelflugzeugs (10),
        • zweites Messen (113) eines Luftdrucks außerhalb des Drehflügelflugzeugs (10),
        • drittes Messen (114) einer Geschwindigkeit des Drehflügelflugzeugs (10) relativ zur Luft, und
        • drittes Bestimmen (115) einer aktuellen Masse des Drehflügelflugzeugs (10),

- einen abschließenden Schritt (116) des Schätzens des Sicherheitsabstands ($H_{FlyA}$) des Drehflügelflugzeugs (10) anhand der aktuellen Flugbedingungen des Drehflügelflugzeugs (10) und der Schemata.

wobei das zweite Bestimmen (120) der maximalen Position der Wellen, über denen das Drehflügelflugzeug (10) fliegt, die folgenden Schritte umfasst:

- Initialisieren (121) einer maximalen Höhe ($Z_{Max}$) der Wellen, über denen sich das Drehflügelflugzeug (10) bewegt,
- viertes Messen (122) einer relativen aktuellen Höhe ($H_{Cur}$) des Drehflügelflugzeugs (10) in Bezug auf eine aktuelle Position der Wellen an einer in Bezug auf das Drehflügelflugzeug (10) vordefinierten Position,
- fünftes Messen (123) einer ersten aktuellen Höhe ($Z_{Cur}$) des Drehflügelflugzeugs (10),
- fünftes Bestimmen (124) einer zweiten aktuellen Höhe ($Z_{wav}$) der Wellen an der in Bezug auf das Drehflügelflugzeug (10) vordefinierten Position, wobei die zweite aktuelle Höhe ($Z_{wav}$) gleich der Differenz der ersten aktuellen Höhe ($Z_{Cur}$) des Drehflügelflugzeugs (10) und der relativen aktuellen Höhe ($H_{Cur}$) ist, so dass:

$$Z_{Wav} = Z_{Cur} - H_{Cur},$$

- erstes Vergleichen (125) der maximalen Höhe ($Z_{max}$) und der zweiten aktuellen Höhe ($Z_{wav}$) der Wellen, das es ermöglicht, einen neuen Wert der maximalen Höhe ($Z_{Max}$) zu definieren.

2. Verfahren nach Anspruch 1,
**dadurch gekennzeichnet, dass** wenn bei dem ersten Vergleichen (125) die maximale Höhe ($Z_{Max}$) kleiner als die zweite aktuelle Höhe ($Z_{Wav}$) der Wellen ist, die maximale Höhe ($Z_{Max}$) den Wert der zweiten aktuellen Höhe ($Z_{Wav}$) der Wellen annimmt.

3. Verfahren nach Anspruch 1,
**dadurch gekennzeichnet, dass** wenn bei dem ersten Vergleichen (125) die maximale Höhe ($Z_{Max}$) kleiner oder gleich der zweiten aktuellen Höhe ($Z_{Wav}$) der Wellen ist, die maximale Höhe ($Z_{Ma}x$) den Wert der zweiten aktuellen Höhe ($Z_{Wav}$) annimmt, und solange die maximale Höhe ($Z_{Max}$) größer als die zweite aktuelle Höhe ($Z_{Wav}$) der Wellen ist, die maximale Höhe ($Z_{Max}$) sich gemäß einer vordefinierten abnehmenden Kurve ändert.

4. Verfahren nach Anspruch 3,
**dadurch gekennzeichnet, dass** die vordefinierte abnehmende Kurve eine horizontale Stufe enthält, während der die maximale Höhe ($Z_{Max}$) über einen vorgegebenen Zeitraum konstant ist, bevor sie abnimmt.

5. Verfahren nach Anspruch 3,
**dadurch gekennzeichnet, dass** die vordefinierte abnehmende Kurve einen exponentiell abnehmenden Verlauf hat.

6. Verfahren nach einem der Ansprüche 1 bis 5,
**dadurch gekennzeichnet, dass** die vordefinierte Position in Bezug auf das Drehflügelflugzeug (10) in der Vertikalen des Drehflügelflugzeugs (10) liegt, und die relative aktuelle Höhe ($H_{Cur}$) in der Vertikalen des Drehflügelflugzeugs (10) gemessen wird.

7. Verfahren nach einem der Ansprüche 1 bis 5,
**dadurch gekennzeichnet, dass** die vordefinierte Position in Bezug auf das Drehflügelflugzeug (10) in einem vordefinierten Abstand von dem Drehflügelflugzeug (10) liegt, wobei die relative aktuelle Höhe ($H_{Cur}$) in dem vordefinierten Abstand von dem Drehflügelflugzeug (10) gemessen wird, um die Wellen, über denen sich das Drehflügelflugzeug (10) bewegt, zu antizipieren.

8. Verfahren nach einem der Ansprüche 1 bis 7,
**dadurch gekennzeichnet, dass** beim Anzeigen (130) eine Symbolik (80), die den Sicherheitsabstand ($H_{FlyA}$) darstellt, auf dem Anzeigeinstrument (21) des Drehflügelflugzeugs (10) so angezeigt wird, dass eine Basis der Symbolik (80) an der Maximalposition der Wellen positioniert ist.

9. Verfahren nach einem der Ansprüche 1 bis 7,
**dadurch gekennzeichnet, dass** beim Anzeigen (130) eine Symbolik (80), die den Sicherheitsabstand ($H_{FlyA}$) darstellt, auf dem Anzeigeinstrument (21) des Drehflügelflugzeugs (10) so angezeigt wird, dass eine Basis der Symbolik (80) an der Maximalposition der Wellen zuzüglich eines Sicherheitszuschlags $(H_{Mrgn})$ positioniert ist.

10. Verfahren nach einem der Ansprüche 1 bis 9,
**dadurch gekennzeichnet, dass**, wenn das Anzeigeinstrument (21) eine barometrische Höhe des Drehflügelflugzeugs (10) anzeigt, die maximale Position der Wellen die maximale Höhe $(Z_{Max})$ ist, zu der ein Skalenkorrekturwert addiert wird, der gleich einer Differenz zwischen einer barometrischen Höhe $(Z_{Bar})$ und einer ersten aktuellen Höhe $(Z_{Cur})$ des Drehflügelflugzeugs (10) ist.

11. Verfahren nach einem der Ansprüche 1 bis 10,
**dadurch gekennzeichnet, dass**, wenn das Anzeigeinstrument (21) eine relative Höhe des Drehflügelflugzeugs (10) in Bezug auf die freie Wasseroberfläche anzeigt, über die das Drehflügelflugzeug (10) fliegt, die maximale Position der Wellen ein maximaler vertikaler Abstand $(H_{Max})$ eines Kamms der Wellen in Bezug auf eine aktuelle Position der Wellen ist, die gleich der maximalen Höhe $(Z\#)$ abzüglich der zweiten aktuellen Höhe $(Z_{wav})$ der Wellen ist, so dass $H_{Max} = Z_{Max} - Z_{Wav} = Z_{Max} - (Z_{Cur} - H_{Cur})$.

12. Vorrichtung (50) zum Bestimmen und Anzeigen eines Sicherheitsabstands eines Drehflügelflugzeugs (10) bei einem Ausfall eines Motors des Drehflügelflugzeugs (10) unter Berücksichtigung der Höhenschwankung der Wellen, über denen sich das Drehflügelflugzeug (10) bewegt, wobei das Drehflügelflugzeug (10) mindestens zwei Motoren umfasst, wobei der Sicherheitsabstand $(H_{FlyA})$ gleich einem Höhenverlust ist, den das Drehflügelflugzeug (10) benötigt, um nach einem Ausfall eines der Motoren des Drehflügelflugzeugs (10) eine Mindestgeschwindigkeit zu erreichen, wobei die Vorrichtung (50) umfasst:

- Vorrichtungen (51-54) zum Bestimmen der aktuellen Flugbedingungen des Drehflügelflugzeugs (10),
- eine Vorrichtung (55) zum Messen einer relativen aktuellen Höhe $(H_{Cur})$ des Drehflügelflugzeugs (10) in Bezug auf die Wellen an einer in Bezug auf das Drehflügelflugzeug (10) vordefinierten Position,
- mindestens eine Vorrichtung (56-57) zum Messen einer ersten aktuellen Höhe $(Z_{Cur})$ des Drehflügelflugzeugs (10),
- mindestens einen Speicher (58), der Rechenanweisungen und Schemata speichert, die den Sicherheitsabstand $(H_{FlyA})$ des Drehflügelflugzeugs (10) gemäß den Flugbedingungen des Drehflügelflugzeugs (10), einer maximalen Höhe $(Z_{Max})$ und gegebenenfalls einer Startmasse des Drehflügelflugzeugs (10) liefern,
- mindestens einen Rechner (59), der geeignet ist, die Rechenanweisungen auszuführen, und
- mindestens ein Anzeigeinstrument (21) für eine vertikale Position des Drehflügelflugzeugs (10),
**dadurch gekennzeichnet, dass** die Vorrichtung (50) konfiguriert ist, um das Verfahren nach einem der Ansprüche 1 bis 11 auszuführen.

**Claims**

1. - Method for determining and displaying a flyaway distance $(H_{FlyA})$ for a rotorcraft (10), taking account of the variation in height of the waves above which the said rotorcraft (10) moves,
the said rotorcraft (10) containing at least two engines and:

- devices for determining (51-54) the said current conditions of flight of the rotorcraft (10),
- a device for measuring (55) a current relative height $(H_{Cur})$ of the rotorcraft (10) above the waves at a predefined position in relation to the rotorcraft (10),
- at least one device for measuring (56-57) a first current altitude $(Z_{cur})$ of the rotorcraft (10),
- at least one memory (58), storing calculation instructions, charts supplying the said flyaway distance $(H_{FlyA})$ for the rotorcraft (10) according to the conditions of flight of the rotorcraft (10), a maximum altitude $(Z_{Max})$ and where applicable a take-off mass of the rotorcraft (10),
- at least one calculator (59) suitable for carrying out the said calculation instructions, and
- at least one instrument for displaying (21) a vertical position of the rotorcraft (10),

the said method comprising a first stage of determination (110) of a flyaway distance $(H_{FlyA})$ of the rotorcraft (10) according to current conditions of flight of the rotorcraft (10), the said flyaway distance $(H_{FlyA})$ being equal to a loss of altitude necessary for the rotorcraft (10) to reach a minimum speed following a failure of one of the engines in the rotorcraft (10),
**characterised in that** the said Method comprises the following stages:

- a second stage of determination (120) of a maximum position of the waves above which the rotorcraft (10) moves, this maximum position being an estimation of the vertical position of the highest wave amongst the said waves; and
- a display (130) of the flyaway distance $(H_{FlyA})$ and the maximum position on a display instrument (21) of the rotorcraft (10), and

the first stage of determination (110) of the flyaway distance $(H_{FlyA})$ of the rotorcraft (10) comprising the following stages:

- a preliminary stage (111) of machine translation of the charts providing the flyaway distance $(H_{FlyA})$ of the rotorcraft (10), according to the conditions of flight of the rotorcraft (10),
- substages (112-115) of determination of the said current conditions of flight of the rotorcraft (10):

  ◦ an first measurement (112) of the external temperature around the rotorcraft (10),
  ◦ a second measurement (113) of the external atmospheric pressure around the rotorcraft (10),
  ◦ a third measurement (114) of the speed of the rotorcraft (10) in relation to the air;
  ◦ a third stage of determination (115) of the current mass of the rotorcraft (10),

- a final stage (116) of estimation of the flyaway distance $(H_{FlyA})$ of the rotorcraft (10) according to the current conditions of flight of the rotorcraft (10) and the charts.

the said second stage of determination (120) of the maximum position of the waves above which the rotorcraft (10) moves comprising the following stages:

- initialisation (121) of a maximum altitude $(Z_{Max})$ of the waves above which the rotorcraft (10) moves,
- a fourth measurement (122) of the current relative height $(H_{Cur})$ of the rotorcraft (10) relative to a current position of the waves at a predefined position in relation to the rotorcraft (10),
- a fifth measurement (123) of a first current altitude $(Z_{Cur})$ of the rotorcraft (10),
- a fifth stage of determination (124) of a second current altitude $(Z_{Wav})$ of the waves at the predefined position in relation of the rotorcraft (10), this second current altitude $(Z_{Wav})$ being equal to the difference of the first current height $(Z_{Cur})$ of the rotorcraft (10) and the current relative height $(H_{Cur})$ so that:

$$Z_{Wav} = Z_{Cur} - H_{Cur},$$

- a first comparison (125) of the maximum altitude $(Z_{Max})$ and the second current altitude $(Z_{Wav})$ of these waves allowing a new value to be defined for the maximum altitude $(Z_{Max})$.

2. - Method as per Claim 1,
   **characterised in that** during the first comparison (125), when the maximum altitude $(Z_{Max})$ is lower than the second current altitude $(Z_{Wav})$ of the waves, the maximum altitude $(Z_{Max})$ acquires the value of the second current altitude $(Z_{Wav})$ of the waves.

3. - Method as per Claim 1,

   **characterised in that** during the first comparison (125),
   when the maximum altitude $(Z_{Max})$ is lower than or equal to the second current altitude $(Z_{Wav})$ of the waves, this maximum altitude $(Z_{Max})$ acquires the value of the second current altitude $(Z_{Wav})$ and
   for as long as the maximum altitude $(Z_{Max})$ remains above the second current altitude $(Z_{Wav})$ of the waves, the maximum altitude $(Z_{Max})$ changes according to a predefined downward curve.

4. - Method as per Claim 3,
   **characterised in that** the predefined downward curve contains a horizontal level during which the maximum altitude $(Z_{Max})$ is constant over a predetermined duration before going downwards.

5. - Method as per Claim 3,
   **characterised in that** the predefined downward curve has a decreasing exponential appearance.

**6.** - Method as per any of Claims 1 to 5,
**characterised in that** the predefined position, relative to the rotorcraft (10) is located on the vertical axis of the rotorcraft (10), the current relative height ($H_{Cur}$) being measured according to the vertical axis of the rotorcraft (10).

**7.** - Method as per any of Claims 1 to 5,
**characterised in that** the predefined position relative to the rotorcraft (10) is located at a predefined distance from the rotorcraft (10), the current relative height ($H_{Cur}$) being measured at the predefined distance from the rotorcraft (10) in order to anticipate the waves above which the rotorcraft (10) moves.

**8.** - Method as per any of Claims 1 to 7,
**characterised in that** during the display (130) a symbology (80) representing the flyaway distance ($H_{FlyA}$) is shown on the display instrument (21) on the rotorcraft (10), so that a base for the symbology (80) is placed at the maximum position of the waves.

**9.** - Method as per any of Claims 1 to 7,
**characterised in that** during the display (130) a symbology (80) representing the flyaway distance ($H_{FlyA}$) is shown on the display instrument (21) of the rotorcraft (10) so that a base for the symbology (80) is placed at the maximum position with a safety margin ($H_{Mrgn}$) added to it.

**10.** - Method as per any of Claims 1 to 9,
**characterised in that** when the display instrument (21) shows a barometric altitude for the rotorcraft (10), the maximum position of the waves is the maximum altitude ($Z_{Max}$) to which a scale correction value equal to the difference between a barometric altitude ($Z_{Bar}$) and a first current altitude ($Z_{Cur}$) of the rotorcraft (10).

**11.** - Method as per any of Claims 1 to 10,
**characterised in that** when the display instrument (21) shows a relative height of the rotorcraft (10) in relation to the free surface above which the rotorcraft (10) is flying, the maximum position of the waves is a maximum vertical distance ($H_{Max}$) of a crest of the waves relative to a current position of the waves equal to the maximum altitude ($Z_{Max}$) from which the second current altitude ($Z_{Wav}$) of the waves is subtracted, so that: $H_{Max} = Z_{Max} - Z_{Wav} = Z_{Max} - (Z_{Cur} - H_{Cur})$.

**12.** - Device (50) for determining and displaying a flyaway distance ($H_{FlyA}$) for a rotorcraft (10), taking account of the variation in height of the waves above which the said rotorcraft (10) is flying, the rotorcraft (10) having at least two engines, the flyaway distance ($H_{FlyA}$) being equal to a loss of altitude necessary for the rotorcraft (10) to reach a minimum speed following a failure of one of the two engines in the rotorcraft (10), this device (50) comprising:

- devices for determining (51-54) the current conditions of flight of the rotorcraft (10),
- a device for measuring (55) a regular current relative height ($H_{Cur}$) of the rotorcraft (10) relative to the waves at a position defined in relation to the rotorcraft (10),
- at least one device for measuring (56-57) a first current altitude ($Z_{cur}$) of the rotorcraft (10),
- at least one memory (58), storing calculation instructions, charts supplying the said flyaway distance ($H_{FlyA}$) for the rotorcraft (10) according to the conditions of flight of the rotorcraft (10), a maximum altitude ($Z_{Max}$) and where applicable a take-off mass of the rotorcraft (10),
- at least one calculator (59) suitable for carrying out the said calculation instructions, and
- at least one instrument for displaying (21) a vertical position of the rotorcraft (10),

**characterised in that** the device (50) is configured in order to implement the method as per any one of Claims 1 to 11.

Fig.1

Fig.2

Fig.3

Fig.4

$Z_{Max} + H_{Mrgn}$

$H_{Max} + H_{Mrgn}$

Fig.5

$Z_{Max}$

Fig.6

$Z_{Max}$

## RÉFÉRENCES CITÉES DANS LA DESCRIPTION

**Documents brevets cités dans la description**

- FR 2900385
- US 20080215197 A
- US 9387938 B
- US 20130221153 A
- US 20090140885 A
- JP H0743109 B
- FR 2282644
- FR 2567270